# EUROPEAN PATENT SPECIFICATION

(11) **EP 3 426 113 B1**
(45) Date of publication and mention of the grant of the patent: **10.04.2024**
(21) Application number: 17708285.6
(22) Date of filing: 07.03.2017
(51) Int. Cl.: A47J 37/06

(54) **AN AIR-FRYING COOKER AND A METHOD OF CLEANING AN AIR-FRYING COOKER**
HEISSLUFTFRITTEUSE UND VERFAHREN ZUR REINIGUNG EINER HEISSLUFTFRITTEUSE
APPAREIL DE CUISSON DE FRITURE À AIR CHAUD ET PROCÉDÉ DE NETTOYAGE ASSOCIÉ

(30) Priority: 09.03.2016 EP 16159310
(43) Date of publication of application: 16.01.2019
(73) Proprietor: Versuni Holding B.V., 5656 AE Eindhoven (NL)
(72) Inventor: TE VELDE, Mart Kornelis-Jan, 5656 AE Eindhoven (NL)
(74) Representative: Vollering, Stefanus Franciscus Maria
(86) International application number: PCT/EP2017/055231
(87) International publication number: WO 2017/153360

(56) References cited:
- WO-A1-87/00261
- US-A- 5 826 496
- US-A1- 2009 238 929
- US-A1- 2015 030 728
- US-B1- 6 201 217

## Description

### FIELD OF THE INVENTION

The present invention relates to an air-frying cooker and to a method of cleaning the chamber of an air-frying cooker after the air-frying cooker has been used to cook food in a circulating flow of hot air.

### BACKGROUND OF THE INVENTION

An air-frying cooker cooks food in hot air that is circulated within a cooking chamber at high speed using a fan. The rapid circulation of air increases heat transfer to the food resulting in shorter cooking times. The rapidly circulating hot air enables food to be fried in air instead of being submerged in fat/oil, as is the case with deep fat frying. US6201217 discloses an electric cooker with a fan that is preferably driven at a speed in the range of 2500 rpm to create an even temperature in the oven.

The internal surfaces and components of an air-frying cooker must be periodically cleaned. This includes the walls of the cooking chamber which receives the food to be cooked but also other components such as the heater, fan and any baffles or guides that are located in the chamber and circulate the flow of hot air within the chamber. The internal cleaning of an air-frying cooker can be an onerous task.

Some background information is found in United States patent application US 2009/0238929. US2015/030728A1 discloses an oven comprising a sprayer for cleaning the cooking cavity.

### SUMMARY OF THE INVENTION

It is an object of the invention to provide an air-frying cooker that has a cleaning function which substantially alleviates or overcomes one or more of the problems mentioned above. A method of cleaning the chamber of an air-frying cooker is also provided. The invention is defined by the independent claims. The dependent claims define advantageous embodiments.

According to the present invention, there is provided an air-frying cooker comprising a chamber, a heater disposed in the chamber to heat air in the chamber, a fan disposed in the chamber and being rotatable to circulate heated air in the chamber to cook food in the chamber in a cooking mode, and an air flow control element positionable in the chamber spaced from a surface of an amount of cleaning fluid introduced into the bottom of the chamber in a cleaning mode, so that when the fan is rotated to generate a circulating air flow within the chamber, the air flow is ducted through a gap between the flow control element and said surface to entrain the cleaning fluid in the circulating air flow to clean the chamber.

By positioning an air flow control element in the chamber, the air may be accelerated over the surface of the cleaning fluid so that it is entrained more readily.

Preferably, the flow control element comprises a plate having a hole therethrough, the plate being operable to direct air that has flowed over the surface of said cleaning fluid through the hole and in a direction away from said surface.

The air-frying cooker may comprise a food receiving container having a bottom wall, the food receiving container being positionable in the chamber and the plate being positionable in the food receiving container so that it extends across said bottom wall above the surface of the cleaning fluid.

By placing the plate in the food receiving container, the plate is supported and spaced from the surface of the cleaning fluid.

The flow control element may comprise a funnel that diverges away from said plate, the funnel being positioned such that air flowing through the hole passes up through the funnel.

The funnel helps to further control the air flow and entrained fluid as it circulates within the chamber.

Preferably, a seal is provided for sealing the chamber after placing said air flow control element in the chamber. The seal prevents leakage of cleaning fluid and can also improve entrainment.

According to another aspect of the present invention, there is also provided a method of cleaning a chamber of an air-frying cooker comprising a heater disposed in the chamber to heat air in the chamber, a fan disposed in the chamber and being rotatable to circulate heated air in the chamber to cook food in the chamber in a cooking mode, the method including the step of initiating a cleaning mode by placing an air flow control element in the chamber spaced from a surface of an amount of cleaning fluid introduced into the bottom of the chamber, and rotating the fan to generate a circulating air flow within the chamber that is ducted through a gap between the flow control element and said surface to entrain the cleaning fluid in the circulating air flow to clean the chamber.

If the air-frying cooker comprises a food container having a bottom wall, and the flow control element comprises a plate having a hole therein, the method may then include the step of placing the plate on the bottom wall of the food container so that it extends across the bottom wall above the surface of the cleaning fluid.

These and other aspects of the invention will be apparent from and elucidated with reference to the embodiments described hereinafter.

### BRIEF DESCRIPTION OF THE DRAWINGS

Embodiments of the invention will now be described, by way of example only, with reference to the accompanying drawing, in which:

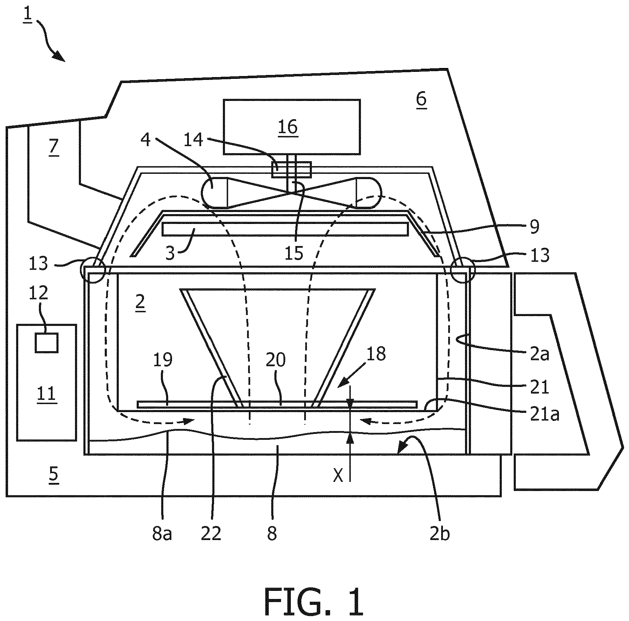

Fig. 1 shows a cross-sectional side elevation of an air-frying cooker according to an embodiment of the invention.

### DETAILED DESCRIPTION OF THE EMBODIMENTS

An embodiment of an air-frying cooker 1 according to the invention is shown in Fig. 1 and comprises a chamber 2, a heater 3 to heat air in the chamber 2, and a fan 4 to circulate heated air in the chamber 2 to cook food placed in the chamber 2 during a cooking mode. The heater 3 and the fan 4 are disposed inside the chamber, close to its upper end. The air-frying cooker 1 may have a base 5 and a lid 6 which together define the chamber 2. The heater 3 and the fan 4 may be contained within the lid 6. A vent 7 permits air to flow from the chamber 2 to outside during a cooking mode although there is only minimal flow through the vent 7 when steam is generated during cooking or in the event that a lot of air leaks in through gaps in the cooking chamber 2.

During a cooking mode, in which the food placed in the chamber 2 is cooked in a circulating flow of hot air in the chamber 2, the chamber 2 is not sealed and heated air can escape through the vent 7.

The chamber 2 needs to be cleaned periodically to remove residue or other dirt that may accumulate on the walls of the chamber 2 and on the surfaces of the heater 3 and fan 4 located in the chamber 2. A cleaning mode may be initiated after every time the air-frying cooker 1 has been used to cook food or, only after it has been used to cook food a number of times.

To automatically clean the air-frying cooker 1 after any cooked food has been removed, a user introduces a cleaning fluid 8 into the chamber 2 so that it at least completely covers the bottom of the chamber 2, but preferably to a depth of at least 1- 2cm or thereabouts. As the fan 4 and heater 3 are mounted at an upper part of the chamber 2, they are spaced from the surface 8a of the cleaning fluid 8 introduced into the chamber 2. Once the cleaning fluid 8 has been introduced into the chamber 2, the chamber 2 may be sealed by closing the lid 6. The vent 7 does not need to be blocked as there is no significant air flow through the vent 7 in the cleaning mode. A cleaning mode is now initiated and the fan 4 is switched on. During a cleaning mode, the speed of the fan 4 is controlled so that it rotates at a sufficiently high speed to entrain the cleaning fluid 8 in the circulating flow of air generated within the chamber 2. By entraining the cleaning fluid, it is lifted up in the air flow and sprayed over the heater 3 and fan 4, as well as over the internal surfaces 2a of the chamber 2 and any other components, such as any air-circulation baffles or guides 9, that are mounted within the chamber 2. The cleaning fluid 8 thereby cleans any accumulated dirt or residue off all these components and surfaces.

As the chamber 2 may be sealed during the cleaning cycle, no cleaning fluid 8 can escape from the chamber 2. Furthermore, the entrainment of the cleaning fluid 8 in the circulating flow of air may be improved. If desired, the heater 3 may also be operated during the cleaning mode to heat the cleaning fluid 8 and the circulating air.

During the cleaning mode, the fan 4 may rotate at a speed of no less than 2500rpm, but it is preferably rotated at a speed of no less than 2700rpm and most peferably at a speed of no less than 2500rpm and no more than 3500rpm. The fan 4 may be rotated at a different, preferably lower, speed during the cooking mode. For example, the fan 4 may rotate at a speed less than 2500rpm during the cooking mode.

The air-frying cooker 1 may include a controller 11 configured to rotate the fan 4 at the speed sufficient to circulate cleaning fluid 8. A user may initiate a cleaning cycle via a user interface 12 that sends a signal to the controller 11. A user may be provided with an indication that a cleaning cycle should be initiated after a predetermined number of cooking cycles have been performed.

The lid 6 may form a seal with the base 5 by a sealing member 13 located between them. The sealing member 13 may be made from a flexible and resilient material such as rubber that is located between interfacing surfaces between the lid 6 and the base 5.

The chamber 2 may also be sealed by a sealing element 14 displosed between a drive shaft 15 that extends between the fan 4 and a motor 16 through a wall of the chamber 2 to prevent escape of cleaning fluid 8 along the shaft 15 towards the motor 16.

A flow control element 18 is positionable in the cooking chamber 2 so that it is spaced from a surface 8a of the cleaning fluid 8. The flow control element 18 serves to duct or constrict the circulating flow of air in the chamber 2 through a gap X between the flow control element 18 and the surface 8a of the cleaning fluid 8. By constricting the air flow in this way, it accelerates as it travels over the surface 8a of the cleaning fluid 8 so the fluid is more easily entrained in the circulating air flow. As the cleaning fluid 8 is more easily entrained in the circulating air flow, it is possible to use a lower fan speed so that the cleaning mode can be performed more efficiently and by using less energy. In certain circumstances, it may be possible to rotate the fan 4 at the same speed at which the fan 4 is rotated during a cooking cycle, or even at a speed lower than the speed at which it is rotated during a cooking cycle.

The gap X will vary depending on the size of the cooking chamber 2 and fan speed, but could be in the range of 1cm - 3 cm. Most preferably, the range may be in the order of 2 to 2.7cm.

In a preferred embodiment, the flow control element 18 comprises a plate 19 having a hole 20 therethrough to direct air that has flowed over the surface 8a of said cleaning fluid 8 in a direction away from said surface 8a through the hole 20, together with the cleaning fluid 8 that is entrained in the air flow. The hole 8 is preferably formed in the centre of the plate 19 so that air is ducted across the surface 8a of the cleaning fluid 8 from all directions towards and up through the hole 20. The underside surface 19a of the plate 19 that faces the surface 8a of the cleaning fluid 8 may be flat so that it extends parallel to the surface 8a of the cleaning fluid 8. However, the underside surface 19a may extend at an angle so that it extends at an angle relative to the surface 8a of the cleaning fluid 8.

The hole 20 in the plate 19 also acts as a constriction so that the air flow, together with the entrained cleaning fluid 8, further accelerates as it passes through the hole 20 and in an upward direction towards the fan 4 and the heater 3 located in the chamber 2 above the plate 19. Accelerating the entrained fluid flow increases cleaning effectiveness as more cleaning fluid is entrained in the air flow. Furthermore, the cleaning fluid 8 impacts the heater 3, fan 4 and other components with greater velocity and force to remove accumulated dirt and residue.

The plate 19 must be located in a position in which it is spaced from the surface 8a of the cleaning fluid 8 in order to duct the flow of air between the plate 19 and the surface 8a of the cleaning fluid 8. To achieve this, the plate 19 may be placed on the bottom wall 21a of a food receiving container 21 that is normally placed in the chamber 2 and used to contain food during a cooking cycle. The bottom wall 21a of the food receiving container 21 is spaced sufficiently from the bottom wall 2b of the chamber 2 to provide the gap X between the plate 19 and the surface 8a when the cleaning fluid 8a has been introduced into the chamber 2.

The plate 19 may be made of aluminium. The hole 20 may also have a diameter in the order of 8 to 9cm.

To further guide the accelerating air flow and entrained cleaning fluid 8 as it travels in an upward direction through the hole 20 in the plate 19, a funnel 22 may be positioned over the hole 20. The funnel 22 may diverge in a direction away from the hole 20 so that the flow is gradually guided upwardly and radially within the chamber 2. The funnel 22 may be integrally formed with the plate 19 or they may be separate components attachable to each other. In another embodiment, the 'funnel' can be a cylindrical tube which helps to move water but the spread of water around the chamber and over the heater may be more limited.

When a user wishes to initiate the cleaning mode, a cleaning fluid 8 is introduced into the chamber 2. The chamber 2 is then sealed and the user may then initiate the cleaning mode via the user interface 12 so that the fan 4 circulates the cleaning fluid 8 around the chamber 2. The fan 4 may continue to run until further intervention by the user. However, the fan 4 preferably continues to run for a predetermined period of time before switching off.

If the flow control element 19 is used, it is placed on the bottom wall 21a of the food receiving basket 21 so that it is spaced from a surface 8a of the cleaning fluid 8, prior to sealing the chamber 2. The air flow generated by operation of the fan 4 will then be ducted through the gap X between the flow control element 19 and the surface 8a of the cleaning fluid 8 and the air flow will be accelerated over the surface 8a of the cleaning fluid 8, thereby entraining the cleaning fluid 8 in the circulating air flow more easily.

After the cleaning mode has finished, the cleaning fluid 8 is drained from the chamber 2. The chamber 2 may also be rinsed and dried using the heater 3.

The cleaning fluid 8 may be water, detergent or a combination of both. Any known types of cleaning agents may also be used. A decalcifying agent may also be introduced into the chamber 2 together with the cleaning fluid 8 to remove any calcified deposits.

The above embodiments as described are only illustrative, and not intended to limit the technique approaches of the present invention. Although the present invention is described in details referring to the preferable embodiments, the present invention is defined by the scope of the appended claims. In the claims, the word "comprising" does not exclude other elements or steps, and the indefinite article "a" or "an" does not exclude a plurality. Any reference signs in the claims should not be construed as limiting the scope.

## Claims

1. An air-frying cooker comprising:
- a chamber (2),
- a heater (3) disposed in the chamber (2) to heat air in the chamber (2),
- a fan (4) disposed in the chamber (2) and being rotatable to circulate heated air in the chamber (2) to cook food in the chamber (2) in a cooking mode,
**characterized in that** the air-frying cooker further comprises:
- an air flow control element (18) positionable in the chamber (2) spaced from a surface (8a) of an amount of cleaning fluid (8) introduced into the bottom of the chamber in a cleaning mode, so that when the fan (4) is rotated to generate a circulating air flow within the chamber (2), the air flow is ducted through a gap (X) between the flow control element (18) and said surface (8a) to entrain the cleaning fluid (8) in the circulating air flow to clean the chamber (2).

2. An air-frying cooker (1) according to claim 1, wherein the flow control element (18) comprises a plate (19) having a hole (20) therethrough, the plate (19) being operable to direct air that has flowed over the surface (8a) of said cleaning fluid (8) through the hole and in a direction away from said surface (8a).

3. An air-frying cooker (1) according to claim 2, comprising a food receiving container (21) having a bottom wall (21a), the food receiving container (21) being positionable in the chamber (2) and the plate (19) being positionable in the food receiving container (21) so that it extends across said bottom wall (21a) above the surface (8a) of the cleaning fluid (8).

4. An air-frying cooker according to claim 2 or 3, wherein the flow control element (18) comprises a funnel (22) that diverges away from said plate (19), the funnel (22) being positioned such that air flowing through the hole (20) passes up through the funnel (22).

5. An air-frying cooker (1) according to any of claims 1 to 4, comprising a seal (13) for sealing the chamber (2) after placing said air flow control element (18) in the chamber (2).

6. A method of cleaning a chamber of an air-frying cooker (1) comprising a heater (3) disposed in the chamber (2) to heat air in the chamber (2), a fan (4) disposed in the chamber (2) and being rotatable to circulate heated air in the chamber (2) to cook food in the chamber (2) in a cooking mode, the method including the step of:
- initiating a cleaning mode by placing an air flow control element (18) in the chamber (2) spaced from a surface (8a) of an amount of cleaning fluid (8) introduced into the bottom of the chamber (2), and
- rotating the fan (4) to generate a circulating air flow within the chamber (2) that is ducted through a gap (X) between the flow control element (18) and said surface (8a) to entrain the cleaning fluid (8) in the circulating air flow to clean the chamber (2).

7. The method according to claim 6, wherein the air-frying cooker (1) comprises a food container (21) having a bottom wall (21a), and the flow control element comprises a plate (19) having a hole (20) therein, the method including the step of placing the plate (19) on the bottom wall (21a) of the food container (21) so that it extends across the bottom wall (21) above the surface (8a) of the cleaning fluid (8).

## Patentansprüche

1. Heißluftfritteuse, umfassend:
- eine Kammer (2),
- einen Heizer (3), die in der Kammer (2) angeordnet ist, um Luft in der Kammer (2) zu erhitzen,
- einen Lüfter (4), der in der Kammer (2) angeordnet und drehbar ist, um erhitzte Luft in der Kammer (2) zirkulieren zu lassen, um in einem Garmodus Lebensmittel in der Kammer (2) zu garen,
**dadurch gekennzeichnet, dass** die Heißluftfritteuse weiter umfasst:
- ein Luftströmungssteuerelement (18), das in der Kammer (2) von einer Oberfläche (8a) einer Reinigungsflüssigkeitsmenge (8), die in einem Reinigungsmodus in den Boden der Kammer eingeleitet wird, beabstandet positionierbar ist, sodass, wenn der Lüfter (4) gedreht wird, um eine zirkulierende Luftströmung innerhalb der Kammer (2) zu erzeugen, die Luftströmung durch einen Spalt (X) zwischen dem Strömungssteuerelement (18) und der Oberfläche (8a) kanalisiert wird, um die Reinigungsflüssigkeit (8) in der zirkulierenden Luftströmung mitzureißen, um die Kammer (2) zu reinigen.

2. Heißluftfritteuse (1) nach Anspruch 1, wobei das Strömungssteuerelement (18) eine Platte (19) umfasst, die ein Loch (20) dort hindurch aufweist, wobei die Platte (19) bedienbar ist, um Luft zu leiten, die über die Oberfläche (8a) der Reinigungsflüssigkeit (8) durch das Loch und in einer Richtung weg von der Oberfläche (8a) geströmt ist.

3. Heißluftfritteuse (1) nach Anspruch 2, umfassend einen Lebensmittelaufnahmebehälter (21), der eine Bodenwand (21a) aufweist, wobei der Lebensmittelaufnahmebehälter (21) in der Kammer (2) positionierbar ist und die Platte (19) in dem Lebensmittelaufnahmebehälter (21) positionierbar ist, sodass er sich über die Bodenwand (21a) über der Oberfläche (8a) der Reinigungsflüssigkeit (8) erstreckt.

4. Heißluftfritteuse nach Anspruch 2 oder 3, wobei das Strömungssteuerelement (18) einen Trichter (22) umfasst, der von der Platte (19) weg auseinanderläuft, wobei der Trichter (22) so positioniert ist, dass Luft, die durch das Loch (20) strömt, nach oben durch den Trichter (22) verläuft.

5. Heißluftfritteuse (1) nach einem der Ansprüche 1 bis 4, umfassend eine Dichtung (13) zum Abdichten der Kammer (2) nach Platzieren des Luftströmungssteuerelement (18) in der Kammer (2).

6. Verfahren zum Reinigen einer Kammer einer Heißluftfritteuse (1), umfassend einen Heizer (3), der in der Kammer (2) angeordnet ist, um Luft in der Kammer (2) zu erhitzen, einen Lüfter (4), der in der Kammer (2) angeordnet und drehbar ist, um erhitzte Luft in der Kammer (2) zirkulieren zu lassen, um Lebensmittel in der Kammer (2) in einem Garmodus zu garen, wobei das Verfahren den Schritt beinhaltet zum:
Initiieren eines Reinigungsmodus durch Platzieren eines Luftströmungssteuerelements (18) in der Kammer (2) von einer Oberfläche (8a) einer in den Boden der Kammer (2) eingeleiteten Reinigungsflüssigkeitsmenge (8) beabstandet, und
Drehen des Lüfters (4), um eine zirkulierende Luftströmung innerhalb der Kammer (2) zu erzeugen, die durch einen Spalt (X) zwischen dem Strömungssteuerelement (18) und der Oberfläche (8a) kanalisiert wird, um die Reinigungsflüssigkeit (8) in der zirkulierenden Luftströmung mitzureißen, um die Kammer (2) zu reinigen.

7. Verfahren nach Anspruch 6, wobei die Heißluftfritteuse (1) einen Lebensmittelbehälter (21) umfasst, der eine Bodenwand (21a) aufweist, und das Strömungssteuerelement eine Platte (19) umfasst, die ein Loch (20) darin aufweist, wobei das Verfahren den Schritt zum Platzieren der Platte (19) auf der Bodenwand (21a) des Lebensmittelbehälters (21) beinhaltet, sodass sie sich über die Bodenwand (21) über der Oberfläche (8a) der Reinigungsflüssigkeit (8) erstreckt.

## Revendications

1. Friteuse à air, comprenant :
- une chambre (2),
- un élément chauffant (3) disposé dans la chambre (2) pour chauffer l'air dans la chambre (2),
- un ventilateur (4) disposé dans la chambre (2) et pouvant tourner pour faire circuler de l'air chauffé dans la chambre (2) pour cuire des aliments dans la chambre (2) dans un mode de cuisson,
**caractérisée en ce que** la friteuse à air comprend en outre :
- un élément de régulation de flux d'air (18) pouvant être positionné dans la chambre (2) espacé d'une surface (8a) d'une quantité de fluide de nettoyage (8) introduite dans le fond de la chambre dans un mode de nettoyage, de telle sorte que, lorsque le ventilateur (4) est mis en rotation pour générer un flux d'air en circulation à l'intérieur de la chambre (2), le flux d'air soit canalisé à travers un espace (X) entre l'élément de régulation de flux (18) et ladite surface (8a) pour entraîner le fluide de nettoyage (8) dans le flux d'air en circulation pour nettoyer la chambre (2).

2. Friteuse à air (1) selon la revendication 1, dans laquelle l'élément de régulation de flux (18) comprend une plaque (19) comportant un trou (20) à travers celle-ci, la plaque (19) pouvant être utilisée pour diriger l'air qui a circulé sur la surface (8a) dudit fluide de nettoyage (8) par le trou et dans une direction opposée à ladite surface (8a).

3. Friteuse à air (1) selon la revendication 2, comprenant un récipient de réception d'aliments (21) présentant une paroi inférieure (21a), le récipient de réception d'aliments (21) pouvant être positionné dans la chambre (2) et la plaque (19) pouvant être positionnée dans le récipient de réception d'aliments (21) de telle sorte qu'elle s'étende à travers ladite paroi inférieure (21a) au-dessus de la surface (8a) du fluide de nettoyage (8).

4. Friteuse à air selon la revendication 2 ou 3, dans laquelle l'élément de régulation de flux (18) comprend un entonnoir (22) qui s'écarte de ladite plaque (19), l'entonnoir (22) étant positionné de telle sorte que l'air circulant par le trou (20) remonte à travers l'entonnoir (22).

5. Friteuse à air (1) selon l'une quelconque des revendications 1 à 4, comprenant un joint (13) pour sceller la chambre (2) après avoir placé ledit élément de régulation de flux d'air (18) dans la chambre (2).

6. Procédé de nettoyage d'une chambre d'une friteuse à air (1) comprenant un élément chauffant (3) disposé dans la chambre (2) pour chauffer l'air dans la chambre (2), un ventilateur (4) disposé dans la chambre (2) et pouvant tourner pour faire circuler de l'air chauffé dans la chambre (2) pour cuire des aliments dans la chambre (2) dans un mode de cuisson, le procédé incluant l'étape consistant à :
lancer un mode de nettoyage en plaçant un élément de régulation de flux d'air (18) dans la chambre (2) espacé d'une surface (8a) d'une quantité de fluide de nettoyage (8) introduite dans le fond de la chambre (2), et
faire tourner le ventilateur (4) pour générer un flux d'air en circulation à l'intérieur de la chambre (2) qui est canalisé à travers un espace (X) entre l'élément de régulation de flux (18) et ladite surface (8a) pour entraîner le fluide de nettoyage (8) dans le flux d'air en circulation pour nettoyer la chambre (2).

7. Procédé selon la revendication 6, dans lequel la friteuse à air (1) comprend un récipient d'aliments (21) présentant une paroi inférieure (21a) et l'élément de régulation de flux comprend une plaque (19) comportant un trou (20) à l'intérieur de celle-ci, le procédé incluant l'étape consistant à placer la plaque (19) sur la paroi inférieure (21a) du récipient d'aliments (21) de telle sorte qu'elle s'étende à travers la paroi inférieure (21) au-dessus de la surface (8a) du fluide de nettoyage (8).
